# EUROPÄISCHE PATENTANMELDUNG

(11) **EP 4 152 525 A1**
(43) Veröffentlichungstag der Anmeldung: **22.03.2023**
(21) Anmeldenummer: 22183319.7
(22) Anmeldetag: 06.07.2022
(51) Int. Cl.: H01R 13/24, H01R 24/38, B60L 53/16, B60L 53/35, H01R 35/04

(54) **STECKER FÜR LADEROBOTER**

(30) Priorität: 20.09.2021 DE 102021124213
(71) Anmelder: Swoboda Wiggensbach KG, 87487 Wiggensbach (DE)
(72) Erfinder: WOSCHNI, Peter, 87474 Buchenberg (DE); HACKL, Johannes, 87487 Wiggensbach (DE); PENIRSCHKE, Kevin, 87463 Dietmannsried (DE); SCHÄDLER, Franz, 87452 Altusried (DE); KONIAS, Stefan, 87463 Dietmannsried (DE)
(74) Vertreter: VKK Patentanwälte PartG mbB

(57) **Zusammenfassung**

Die Erfindung betrifft einen zweiteiligen Stecker (1) für die Übertragung von Ladestrom für Fahrzeugbatterien elektrisch angetriebener Fahrzeuge, aufweisend einen ersten (2) und einen mit diesem verbindbaren zweiten Steckerteil (3), wobei jeder Steckerteil (2, 3) jeweils eine Mehrzahl zueinander beabstandeter, ringförmig koaxial jeweils in einer Ebene (4, 4') angeordneter Stromleiter (5, 5') aufweist, wobei der erste Steckerteil (2) eine sich in axialer Richtung von der Ebene (4) weg erstreckende stromleitfähige Ausgleichsvorrichtung (6) aufweist, die in Kontaktlage der beiden Steckerteile (2, 3) durch lokale Veränderung ihrer axialen Länge (7) eine nicht exakt parallele Lage der beiden Ebenen (4, 4') zueinander ausgleichend ist.

## Beschreibung

Die vorliegende Erfindung betrifft einen Stecker für einen Laderoboter.

Im Zuge der sich nunmehr stark entwickelnden Elektromobilität werden technische Lösungen der Zufuhr elektrischer Energie zu den Fahrzeugbatterien immer drängender benötigt. Übliche Fahrzeugbatterien werden dabei über drei Phasen mit 11 kW oder 22kW Leistung geladen, so dass die verwendeten Leitungen und Stecker entsprechend ausgelegt sein müssen.

Bislang bekannt und üblich ist die Verwendung von Ladekabeln, die an Ladestationen in Form von Säulen oder Wallboxes oder in einem Fahrzeug vorgehalten werden und die von einem Nutzer manuell in die entsprechenden Stecker an Ladesäule, Wallbox oder Fahrzeug gesteckt werden müssen. Dieser Ladeprozeß ist aufwendig und führt mit unter dazu, dass insbesondere Hybridfahrzeuge nicht regelmäßig geladen werden und damit ihr umweltschonendes Potential nicht voll ausschöpfen. Nachteilig ist ebenfalls der erhöhte Platzbedarf, da am Stellplatz des Fahrzeuges sowohl Platz für die Ladesäule benötigt wird als auch seitlich des ruhenden Fahrzeuges für des Herumführen des Ladekabels oder sogar für dessen seitliches Einstecken, sofern der Stecker am Fahrzeug seitlich angeordnet ist. Erschwert ist damit auch ein automatisches Einparken-Aufladen des Fahrzeuges, wie es wünschenswert wäre, da bereits eine ganze Reihe von Fahrzeugen in der Lage sind, sich selbst ohne Hilfe eines Benutzers einzuparken.

Grundsätzlich könnte ein automatisiertes Laden der Fahrzeugbatterie über Induktion erfolgen, jedoch ist diese bei dieser Anwendung von eher geringem Wirkungsgrad, was zu langen Ladezeiten und hohen Energieverlusten führt und insbesondere auch für Personen mit induktiv erwärmbaren Hilfsmitteln in oder am Körper nicht ungefährlich ist.

Nachteilig ist auch, dass ein solches induktives Ladesystem wohl eher nicht bidirektional genutzt werden kann, was bei der geplanten Verwendung von Fahrzeugbatterien im Rahmen eines Smart-Grids nachteilig ist.

Das manuelle Einführen eines Ladekabels in einen Stecker könnte durch einen die dafür notwenigen Bewegungen wie Entnahme des Ladekabels von der Ladesäule, Führen zum Fahrzeug und Einstecken in dessen Ladestecker ausführenden Roboter ersetzt werden. Dies führt zwar zu einem automatischen Ladevorgang, ist jedoch nachteilig hinsichtlich der hohen Kosten für den Roboter selber und dessen Platzbedarf.

Es ist daher Aufgabe der vorliegenden Erfindung, eine Vorrichtung für einen automatischen Ladevorgang eines elektromotorischen Fahrzeuges anzugeben, die diese Nachteile nicht aufweist.

Bezüglich der Vorrichtungsaufgabe schlägt die Erfindung einen zweiteiligen Stecker.

Der erfindungsgemäße zweiteilige Stecker für die Übertragung von Ladestrom für Fahrzeugbatterien elektrisch angetriebener Fahrzeuge weist einen ersten und einen mit diesem verbindbaren zweiten Steckerteil auf, wobei jeder Steckerteil jeweils eine Mehrzahl zueinander beabstandeter, ringförmig koaxial jeweils in einer Ebene angeordneter Stromleiter aufweist, wobei der erste Steckerteil eine sich in axialer Richtung von der Ebene weg erstreckende stromleitfähige Ausgleichsvorrichtung aufweist, die in Kontaktlage der beiden Steckerteile durch lokale Veränderung ihrer axialen Länge eine nicht exakt parallele Lage der beiden Ebenen zueinander ausgleichend ist.

Um einen möglichst einfachen und automatisierten Ladevorgang zu ermöglichen, schlägt die Erfindung mit großem Vorteil einen Stecker aus zwei Steckerteilen vor, die zur Herstellung einer und in Kontaklage nicht exakt aufeinander ausgerichtet sein müssen, sondern sich in gewissen Grenzen in undefinierter Lage zueinander befinden können. Dies vereinfacht insbesondere ein robotisches Einführen des einen Steckerteils in den anderen, da eine geringere Positionsgenauigkeit erforderlich ist.

Die erwähnte undefinierte Lage bezieht sich dabei sowohl auf einen axialen Abstand der beiden Steckerteile zueinander als auch auf deren Ausrichtung im Raum, die nicht exakt fluchtend sein muß. Hinsichtlich des axialen Abstandes der beiden Steckerteile schlägt die Erfindung eine stromleitfähige Ausgleichsvorrichtung vor, die in Kontaktlage der beiden Steckerteile durch lokale Veränderung ihrer axialen Länge eine nicht exakt parallele Lage der beiden Steckerteile zueinander und damit eines nicht einheitlichen Abstandes zwischen diesen, bzw. zwischen deren stromführenden Elemente ausgleichend ist. Hinsichtlich eines Ausgleiches der Ausrichtung der beiden Steckerteile im Raum schlägt die Erfindung die Verwendung einer Mehrzahl zueinander beabstandeter, ringförmig koaxial jeweils in einer Ebene angeordneter Stromleiter in einem Steckerteil vor. Durch diese vorteilhafte Maßnahme können die beiden Steckerteile eine annähernd beliebige Rotationswinkellage zueinander aufweisen, ohne dass ein stromleitender Kontakt zwischen ihnen verhindert wäre.

In Weiterbildung der Erfindung ist vorgesehen, dass die Ausgleichsvorrichtung als eine Mehrzahl längenveränderlicher, in Kontaktlage stromübertragender und an den Stromleitern des ersten Steckerteils angeordneter Kontaktpins ausgebildet ist. Die Kontaktpins sind dabei insbesondere gegen eine Federkraft längenveränderlich ausgebildet, wobei pro Stromleiter und damit pro Phase dessen mehrere Kontaktpins die Übertragung der hohen Strommengen ermöglichen. Wie geschildert, ermöglicht die Erfindung einen Ausgleich von nicht zueinander parallel liegenden Ebenen der jeweiligen Stromleiter, indem diejenigen Kontaktpins ihre axiale Länge vermindern, die axial dichter an der anderen Stromleiterebene liegen, so dass weitestgehend alle Kontaktpins einen elektrisch leitfähigen Kontakt zwischen den Stromleitern der beiden Steckerteile herstellen.

In Ausgestaltung der Erfindung ist vorgesehen, dass die Stromleiter eines Steckerteils in einem Winkelbereich zwischen 180° und 358°, vorzugsweise zwischen 260° und 350°, insbesondere zwischen 300° und 350°, ganz besonders bevorzugt zwischen 320° und 340° ringförmig verlaufend sind. Durch diese vorteilhafte Maßnahme ermöglicht die Erfindung einen stromleitenden Kontakt zwischen den beiden Steckerteilen über einen großen Rotationswinkelbereich. Bei herkömmlichen Steckern gibt es in der Regel nur eine einzige Lage beider Steckerteile zueinander, in der eine stromleitende Verbindung hergestellt werden kann. Demgegenüber können die beiden erfindungsgemäßen Steckerteile sogar bis zu 350° gegeneinander verdreht sein, ohne dass dies eine solche stromleitende Verbindung verhindern würde.

Sind die Stromleiter im Querschnitt viereckig, insbesondere quadratisch oder rechteckig ausgebildet, insbesondere jeweils mit Querschnitten von 2 mm² oder mehr, so steht ausreichend Fläche für die Stromleitung zur Verfügung, ohne dass es zu einer zu starken Erwärmung der Stromleiter beim Ladevorgang käme.

Mit großem Vorteil schlägt die Erfindung weiter vor, dass ein Stromleiter des ersten Steckerteils drei oder mehr Kontaktpins aufweist, insbesondere mit ihm stoffschlüssig oder verstemmt oder gepresst verbunden ausgebildete Kontaktpins, die vorzugsweise äquidistant über seinen Umfang verteilt angeordnet sind. Eine solche Anzahl und auch Verteilung über den Winkelumfang des Stromleiters stellt eine optimale Anordnung von Kontaktpins zur Stromübertragung dar.

In Weiterbildung der Erfindung ist vorgesehen, dass ein Stromleiter im Befestigungsbereich eines Kontaktpins eine querschnittsvergrößerende Aufweitung aufweist. Hierdurch ist eine besonders dauerhafte und feste Verbindung von Kontaktpin und Stromleiter ermöglich. Diese Aufweitungen sind dabei insbesondere über den Winkelumfang des Stromleiters verteilt, um so einen maximalen Isolierabstand zwischen zwei benachbarten Stromleitern zu gewährleisten.

Sind die Kontaktpins unterschiedlich lang ausgebildet, ergibt sich mit großem Vorteil eine definierte Kontaktierreihenfolge.

In Ausgestaltung der Erfindung ist vorgesehen, dass das erste Steckerteil Kraftmeßsensoren aufweist, die dazu ausgebildet sind, das Vorliegen einer Mindestandrückkraft an den zweiten Steckerteil zu ermitteln. Dies stellt eine stets optimale Stromübertragung sicher und verhindert die Bildung von Funkenstrecken, die zu Abbränden an den Kontaktpins führen könnten.

Schließlich ist in Weiterbildung der Erfindung noch vorgesehen, dass das erste Steckerteil innerhalb seines innersten Stromleiters einen, insbesondere kegelförmigen, Führungskörper aufweist, der die Ebene der Stromleiter überragend ist und dass das zweite Steckerteil innerhalb seines innersten Stromleiters eine, insbesondere kegelförmige, Ausnehmung aufweist, wobei Führungskörper und Ausnehmung eine Zwangsführung für beide Steckerteile bildend sind. Hierdurch wird eine zwangsgeführte Annäherung der beiden Steckerteile ermöglicht, bis die erfindungsgemäße Ausgleichsvorrichtung wirken kann. Der Führungskörper ist insbesondere mit Federkraft beaufschlagt ausgebildet.

Der zuvor beschriebene zweiteilige Stecker ist besonders geeignet, um in einer robotischen Vorrichtung eingesetzt zu werden, die einen angetriebenen, fahrbaren und mit einer Ladestromquelle verbundenen Körper mit einer daran angeordneter, angetriebener Hubvorrichtung aufweist, wobei ein Ende der Hubvorrichtung das zuvor beschriebene, erste Steckerteil aufweist. Das zweite Steckerteil wäre dann in einem Fahrzeug angebracht, insbesondere an dessen Unterboden. Die entsprechend flach ausgebildete robotische Vorrichtung fährt sensorgesteuert unter das ruhende Fahrzeug in den Bereich von dessen zweitem Steckerteil, fährt die Hubvorrichtung aus und verbindet so den ersten mit dem zweiten Steckerteil, wodurch eine stromleitende Verbindung von der Ladestromquelle zur Fahrzeugbatterie hergestellt ist.

Die Erfindung wird nachfolgend an den Figuren der Zeichnung näher erläutert. Hierbei zeigen
- Fig. 1:: eine schematische perspektivische Ansicht der beiden Stromleiterebenen der Steckerteile,
- Fig. 2:: eine schematische Seitenansicht der Fig. 1 in zwei Teilfiguren a) und b) mit dem Kontaktvorgang der beiden Steckerteile,
- Fig. 3:: eine perspektivische Ansicht eines erfindungsgemäßen zweiteiligen Steckers an einem Hubarm und
- Fig. 4:: eine schematische Schnittansicht der Ausführungsform in Fig. 3.

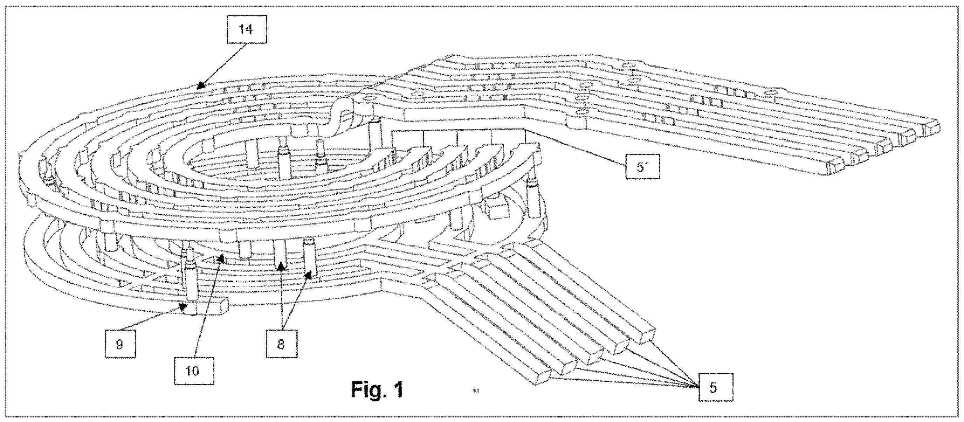

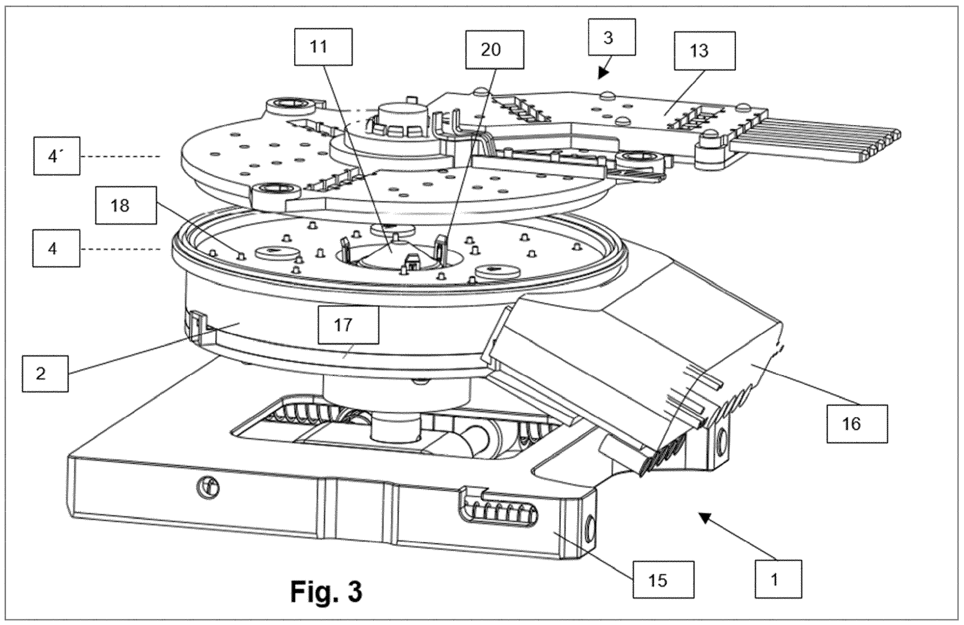

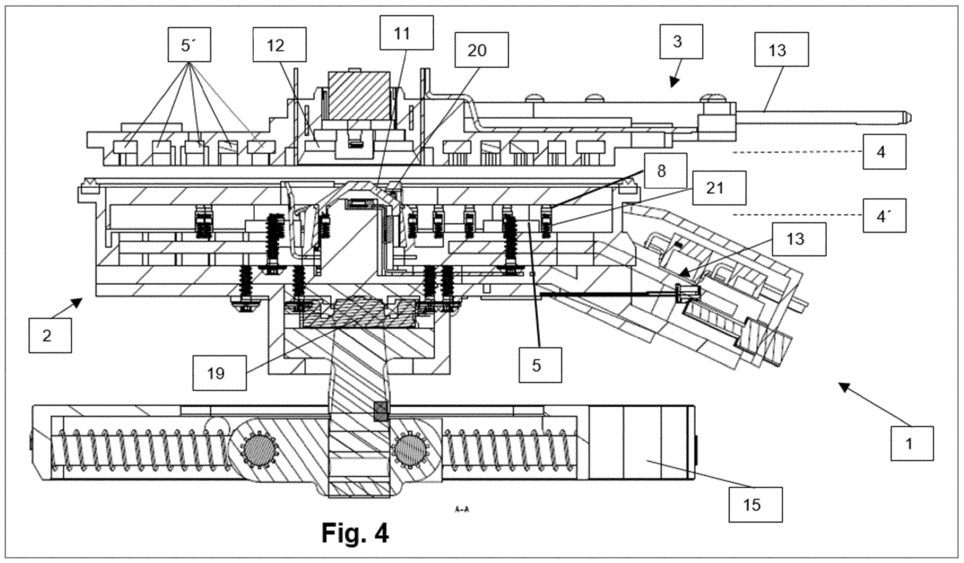

**Fig. 1** zeigt eine schematische perspektivische Ansicht eines Bauteils des zweiteiligen Steckers 1 nämlich Stromleiter 5 des ersten Steckerteils 2 und Stromleiter 5' des zweiten Steckerteils 3. Die dargestellten Stromleiter 5, 5' sind im jeweiligen Steckerteil aufgenommen, der weitere Bauteile enthält, wie die Figuren 3 und 4 zeigen. Pro Steckerteil sind fünf konzentrisch zueinander angeordnete und voneinander radial beabstandete Stromleiter 5, 5' vorgesehen, die jeweils eine Ebene 4, 4' definieren, bzw. in dieser gemeinsamen Ebene liegen. Dabei ist pro Steckerteil 2, 3 jeweils ein innerster Stromleiter 10, 10' vorgesehen, der ein radial inwärts liegendes Auge 14, 14' bildet. Jeder Stromleiter 5, 5' verläuft dabei in einem Bereich seiner Länge ringförmig mit einem Winkelumfang von hier 330°. Jeder Stromleiter 5, 5' weist zusätzlich einen Abschnitt 13 auf, mit dem er mit anderen, nicht dargestellten stromleitenden Bauteilen verbunden ist.

Die Stromleiter 5, 5' weisen bei dieser Ausführungsform einen quadratischen Querschnitt von 4 mm² auf, solche von 9 mm² oder rechteckige Querschnitte von 6mm² sind ebenfalls erfindungsgemäß.

Zu erkennen sind mehrere Aufweitungen 9 pro Stromleiter 5, 5' die über die Länge des jeweiligen Stromleiters verteilt angeordnet sind. Diese Aufweitungen 9 sind sowohl im ersten Steckerteil 2 vorgesehen als auch im zweiten Steckerteil 3. Im ersten Steckerteil 2 bilden sie jeweils den Ort der Befestigung des zugehörigen Kontaktpins 8, der am Stromleiter aufgelötet, angeschweißt, gepresst oder verstemmt ist.

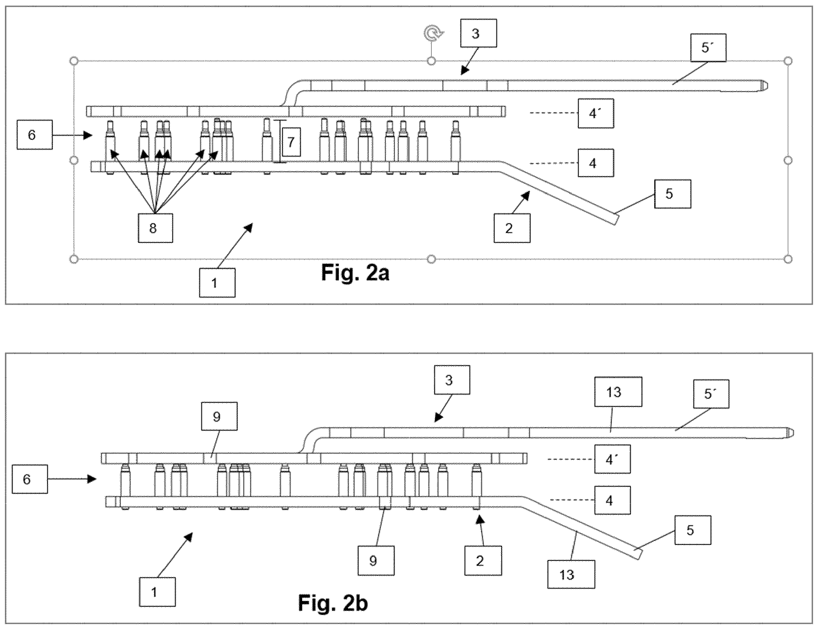

**Fig. 2** zeigt eine schematische Seitenansicht des Gegenstandes der Fig. 1 in zwei Teilfiguren a und b mit dem Kontaktvorgang der beiden Steckerteile 2, 3. **Fig. 2a** zeigt die Position der Stromleiter 5, 5' der beiden Steckerteile 2, 3 kurz vor einem Kontakt. Zu erkennen ist, dass die Kontaktpins 8 unterschiedliche Längen haben und die längeren bereits einen Kontakt herstellen. Hierdurch ist eine definierte Kontaktreihenfolge sichergestellt. Die gegen eine Federkraft längenveränderlichen Kontaktpins 8 gleichen so Verkippungen der beiden Ebenen 4, 4' aus und führen annähernd kreisumfänglich zu einer sicheren Kontaktierung der beiden Steckerteile 2, 3 zur Stromleitung. **Fig. 2b** zeigt die Kontaktlage der beiden Steckerteile 2, 3. In dieser kontaktieren sämtliche Kontakpins 8 eines Stromleiters 5 des ersten Steckerteils 2, und damit mehrere pro Phase, den jeweils zugeordneten Stromleiter 5' des zweiten Steckerteils 3. Die beiden Steckerteile 2, 3 werden dabei unter einer Kraft von mindestens 80N in Kontaktlage gehalten.

**Fig. 3** zeigt eine perspektivische Ansicht eines erfindungsgemäßen zweiteiligen Steckers 1 an einem Hubarm 15, wobei der zweite Steckerteil 3 an einem nicht dargestellten Fahrzeugunterboden angeordnet ist. Der Hubarm 15 ist ein Teil eines mit einer Ladestromquelle verbundenen und hier nicht weiter dargestellten robotischen Fahrzeuges, das dazu ausgelegt ist, sensorgesteuert automatisch unter den Fahrzeugboden eines ruhenden Fahrzeugs zu fahren und dort einen elektrischen Kontakt zwischen den beiden Steckerteilen 2, 3 zum Laden der Fahrzeugbatterie herzustellen.

Der erste Steckerteil 2 weist auf seiner rechten Seite eine Stromzuleitung 16 auf, angedeutet sind die im Inneren des Steckerteils 2 verlaufenden Stromleiter 5, hier deren Abschnitte 13. Der runde Teil des ersten Steckerteils 2 enthält die um einen Winkelumfang von 330° gebogenen Abschnitte der Stromleiter 5. Zu erkennen sind die durch das Gehäuse 17 ragenden Enden 18 der Kontaktpins 8. Weiter zu erkennen ist ein Drucksensor 19, der die Kontaktkraft von mindestens 80N messen und an eine nicht dargestellte Steuerung des robotischen Fahrzeuges weiterleitet, die ihrerseits bei Unterschreiten dieser Kontaktkraft den Ladevorgang abbricht, bzw. erst gar nicht beginnt.

Zu erkennen ist weiter der kegelförmige Führungskörper 11, der im Inneren des Auges 14 (siehe Fig. 1) angeordnet ist und durch eine Öffnung des Gehäuses 17 in Richtung auf den zweiten Steckerteil 3 ragt. Innerhalb dieser Öffnung sind zweite Führungskörper 21 angeordnet, die den kegelförmigen Führungskörper 11 axial überragen und Teil der mechanischen Zwangsführung der beiden Steckerteile 2, 3 auf den letzten Zentimetern ihrer Annäherung sind.

**Fig. 4** zeigt eine schematische Schnittansicht der Ausführungsform gemäß Figur 3. Zu erkennen sind insbesondere der kraftbeaufschlagte Führungskörper 11, ein zweiter Führungskörper 20, ein Drucksensor 19, die im Inneren der Kontaktpins 8 angeordneten Federn 21, gegen deren Federkraft die oberen Teile der Kontaktpins längenverkürzend einfahrbar sind, Stromleiter 5 und 5', sowie im zweiten Steckerteil 3 die Ausnehmung 12, in die der Führungskörper 11 formschlüssig zur Zwangsführung einfährt.

Mit großem Vorteil schlägt die Erfindung einen zweiteiligen Stecker vor, der aufgrund einer Lageausgleichsvorrichtung zwischen den beiden Steckerteilen, seiner flachen Bauweise und einer annähernd kreisförmigen Stromkontaktierung durch ringförmige Stromleiter in der Lage ist, einen einfachen und automatisierten Ladevorgang der Batterie eines elektrisch angetriebenen Fahrzeuges bei undefinierter Lage der beiden Steckerteile zueinander zu ermöglichen, indem er eine exakte Winkellage der beiden Steckerteile zueinander überflüssig macht und eine Verkippung der beiden Steckerteile gegeneinander durch eine stromleitfähige Ausgleichsvorrichtung, die ihre axiale Länge lokal verändern kann, ausgleicht.

Eine mit einem solchen erfindungsgemäßen Stecker versehene, robotische Vorrichtung ermöglicht eine automatisierte Aufladung.

### BEZUGSZEICHENLISTE

- 1: Zweiteiliger Stecker
- 2: Erster Steckerteil
- 3: Zweiter Steckerteil
- 4: Ebene
- 5: Stromleiter
- 6: Ausgleichsvorrichtung
- 7: axiale Länge
- 8: Kontaktpin
- 9: Aufweitung
- 10: innerster Stromleiter
- 11: Führungskörper
- 12: Ausnehmung
- 13: Abschnitt
- 14: Auge
- 15: Hubarm
- 16: Stromzuleitung
- 17: Gehäuse
- 18: Kontaktpinende
- 19: Drucksensor
- 20: Zweiter Führungskörper
- 21: Feder

## Patentansprüche

1. Zweiteiliger Stecker (1) für die Übertragung von Ladestrom für Fahrzeugbatterien elektrisch angetriebener Fahrzeuge, aufweisend einen ersten (2) und einen mit diesem verbindbaren zweiten Steckerteil (3), wobei jeder Steckerteil (2, 3) jeweils eine Mehrzahl zueinander beabstandeter, ringförmig koaxial jeweils in einer Ebene (4, 4') angeordneter Stromleiter (5, 5') aufweist, wobei der erste Steckerteil (2) eine sich in axialer Richtung von der Ebene (4) weg erstreckende stromleitfähige Ausgleichsvorrichtung (6) aufweist, die in Kontaktlage der beiden Steckerteile (2, 3) durch lokale Veränderung ihrer axialen Länge (7) eine nicht exakt parallele Lage der beiden Ebenen (4, 4') zueinander ausgleichend ist.

2. Stecker (1) gemäß Anspruch 1, **dadurch gekennzeichnet, dass** die Ausgleichsvorrichtung (6) als eine Mehrzahl längenveränderlicher, in Kontaktlage stromübertragender und an den Stromleitern (5) des ersten Steckerteils (2) angeordneter Kontaktpins (8) ausgebildet ist.

3. Stecker (1) gemäß Anspruch 1 oder 2, **dadurch gekennzeichnet, dass** die Stromleiter (5, 5') eines Steckerteils (2, 3) in einem Winkelbereich zwischen 180° und 358°, vorzugsweise zwischen 260° und 350°, insbesondere zwischen 300° und 350°, ganz besonders bevorzugt zwischen 320° und 340° ringförmig verlaufend sind.

4. Stecker (1) gemäß Anspruch 1, 2 oder 3, **dadurch gekennzeichnet, dass** die Stromleiter (5, 5') im Querschnitt viereckig, insbesondere quadratisch oder rechteckig ausgebildet sind.

5. Stecker (1) gemäß einem der vorherigen Ansprüche, **dadurch gekennzeichnet, dass** ein Stromleiter (5) des ersten Steckerteils (2) drei oder mehr Kontaktpins (8) aufweist, insbesondere mit ihm stoffschlüssig oder verstemmt oder gepresst verbunden ausgebildete Kontaktpins (8), die vorzugsweise äquidistant über seinen Umfang verteilt angeordnet sind.

6. Stecker (1) gemäß einem der vorherigen Ansprüche, **dadurch gekennzeichnet, dass** ein Stromleiter (5) im Befestigungsbereich eines Kontaktpins (8) eine querschnittsvergrößerende Aufweitung (9) aufweist.

7. Stecker (1) gemäß einem der vorherigen Ansprüche, **dadurch gekennzeichnet, dass** die Kontaktpins (8) unterschiedlich lang ausgebildet sind.
